Europäisches Patentamt

European Patent Office

Office européen des brevets

(19)

(11) Numéro de publication: **0 340 052**
**A1**

(12) # DEMANDE DE BREVET EUROPEEN

(21) Numéro de dépôt: **89400802.8**

(22) Date de dépôt: **22.03.89**

(51) Int. Cl.4: **C 08 K 3/24**
**H 01 Q 17/00, H 05 B 6/76,**
**C 08 K 9/00, C 09 C 1/36**

(30) Priorité: **30.03.88 FR 8804168**

(43) Date de publication de la demande:
**02.11.89 Bulletin 89/44**

(84) Etats contractants désignés:
**AT BE CH DE ES FR GB GR IT LI LU NL SE**

(71) Demandeur: **RHONE-POULENC CHIMIE**
**25, quai Paul Doumer**
**F-92408 Courbevoie Cédex (FR)**

(72) Inventeur: **Iltis, Alain**
**13, rue des Noyers**
**F-93300 Aubervilliers (FR)**

**Maestro, Patrick**
**27, rue Honoré de Balzac**
**F-95470 Fosses (FR)**

(74) Mandataire: **Dubruc, Philippe et al**
**RHONE-POULENC CHIMIE Service Brevets Chimie 25,**
**quai Paul-Doumer**
**F-92408 Courbevoie Cédex (FR)**

(54) **Composition de matière à base de titanate de baryum utilisable comme absorbeur d'ondes électromagnétiques.**

(57) L'invention a trait à une nouvelle composition de matière, utilisable notamment comme absorbeur d'ondes électromagnétiques, du type comprenant une poudre de titanate de baryum en dispersion dans une matrice organiques, et qui est caractérisée en ce que le diamètre moyen des particules constituant ladite poudre de titanate de baryum est supérieur ou égal à 1 micron.

Cette composition de matière peut servir à la fabrication de joints pour four à micro-ondes.

EP 0 340 052 A1

## Description

## COMPOSITION DE MATIERE A BASE DE TITANATE DE BARYUM UTILISABLE COMME ABSORBEUR D'ONDES ELECTROMAGNETIQUES

La présente invention a trait à une nouvelle composition de matière constituée d'une poudre de titanate de baryum dispersée dans une matrice organique et qui est susceptible d'être utilisée comme absorbeur d'ondes électromagnétiques, notamment de micro-ondes.

Elle concerne également un procédé de préparation permettant d'aboutir à un titanate de baryum spécifiquement adapté à la réalisation d'un tel absorbeur.

Elle concerne enfin l'utilisation de cette composition pour la fabrication de joints, notamment pour fours à micro-ondes.

Les absorbeurs d'ondes électromagnétiques, et notamment de micro-ondes, ont fait l'objet ces dernières années de très nombreuses études qui ont elles-mêmes donné lieu à une littérature abondante sur le sujet.

Les absorbeurs les plus connus et les plus utilisés sont ceux à base de matériaux ferro-ou ferrimagnétiques, comme par exemple les ferrites, qui se présentent soit sous forme de frittés, soit sous forme de poudres en dispersion dans des résines organiques (brevets américains 4.003.840, 4.023.174 et 4.414.339).

L'utilisation de textiles métalliques comme absorbeurs de micro-ondes a également été décrite ; dans ce cas, on met en oeuvre de très fines fibres de métaux ou d'alliages éventuellement ferromagnétiques, noyés ou non dans un polymère organique.

Certains brevets (US 4.200.701 et 4.281.072) font aussi référence à des matériaux à base exclusivement de polymères, comme par exemple des mousses de polypropylène, et susceptibles d'être utilisés pour l'absorption des micro-ondes.

De manière plus plausible, on a décrit dans le brevet américain 4.027.384 des absorbeurs de micro-ondes faisant appel à des polymères chargés au carbone ou au graphite, c'est à dire avec des charges semi-conductrices.

Il est enfin connu qu'un matériau ferroélectrique fritté comme le titanate de baryum présente certaines propriétés absorbantes vis à vis des ondes électromagnétiques, mais il est admis que ces propriétés absorbantes disparaissent lorsque ce produit est ramené sous forme de poudre ; ceci tend en partie à expliquer les raisons pour lesquelles, à ce jour, les absorbeurs chargés au titanate de baryum seul n'ont pas trouvé de débouchés à l'échelle industrielle.

La présente invention a donc pour objet premier de proposer une nouvelle composition de matière à base de titanate de baryum, susceptible de trouver des applications dans le domaine de l'absorption des ondes électromagnétiques, et plus particulièrement des micro-ondes.

Dans un second objet, l'invention vise également à proposer un procédé qui permette de synthétiser par des moyens simples, efficaces et de mise en oeuvre aisée une poudre de titanate de baryum présentant des caractéristiques spécifiquement adaptées à la réalisation d'une telle composition.

Dans un troisième objet, l'invention vise enfin à proposer des joints dont les caractéristiques de forme et de composition permettent d'assurer efficacement l'étanchéité de dispositifs générateurs d'ondes électromagnétiques, notamment des fours à micro-ondes.

A la suite d'importantes recherches menées dans ce domaine, la Demanderesse a maintenant trouvé, et il s'agit là d'un des premiers objets de la présente invention, qu'il est possible d'obtenir des compositions à base de poudre de titanate de baryum en dispersion dans une matrice organique et présentant des propriétés absorbantes vis à vis des ondes électromagnétiques lorsque ladite poudre de titanate de baryum possède des caractéristiques de structure et/ou de composition particulières.

Plus spécifiquement, la composition de matière selon l'invention qui est du type comprenant une poudre de titanate de baryum en dispersion dans une matrice organique, est caractérisée en ce que le diamètre moyen des particules constituant ladite poudre de titanate de baryum est supérieur ou égal à 1 micron.

Par diamètre moyen, on entend ici que plus de 50 % en nombre des particules constituant la poudre de $BaTiO_3$ présentent un diamètre, mesuré par diffraction de la lumière, supérieur ou égal à 1 micron.

En outre, une poudre de titanate de baryum constitutive d'une composition de matière selon l'invention répond à au moins l'une des caractéristiques préférentielles suivantes :
- les particules de la poudre présentent un diamètre moyen supérieur à 10 μm, et encore plus préférentiellement supérieur à 100 μm ; un diamètre moyen compris entre 100 et 200 μm est particulièrement avantageux
- ces particules sont constituées par l'agrégation de cristallites élémentaires dont le diamètre moyen est supérieur ou égal à 1 μm
- le titanate de baryum se présente majoritairement sous sa phase cristalline quadratique ; par majoritairement, on entend que plus de 50 % en volume du $BaTiO_3$ est présent sous ladite phase ; de préférence, cette teneur en phase quadratique sera supérieure à 90 % ;
- le rapport molaire Ba/Ti de la poudre de titanate de baryum est légèrement supérieur à 1
- la teneur du strontium contenu dans la poudre de titanate de baryum est inférieure ou égale à 1 % en poids, de préférence inférieure à 0,1 % en poids.

La nature du composé organique qui constitue la matrice dans laquelle est maintenu en dispersion la poudre de titanate de baryum n'est pas critique. Le choix de ce composé est d'une manière générale gouverné par les deux critères pratiques suivants : ce composé doit être tout d'abord facile à mettre en oeuvre ; et d'autre part, il doit être disponible au moindre coût.

Par facilité de mise en oeuvre, on entend notamment une bonne aptitude à mettre en dispersion et à maintenir en dispersion la poudre de titanate de baryum de manière à obtenir un mélange homogène, une faible tendance au bullage, ainsi qu'une bonne aptitude à la mise en forme.

Peuvent convenir ainsi plus particulièrement les polymères et/ou copolymères thermoplastiques du type polyoléfine, comme par exemple le polyéthylène et le polypropylène, du type vinylique, comme par exemple le PVC, du type styrénique, comme par exemple le polystyrène, ou bien encore du type polyacrylique, polyamide ou polyester, ainsi que les élastomères naturels ou synthétiques du type caoutchouc, polybutadiène ou silicone, et enfin les polymères et/ou copolymères thermodurcissables du type aminoplaste, phénoplaste, polyester réticulé, époxyde et polyuréthane.

Le rapport, en pourcentage, du volume occupé par la phase dispersée ($BaTiO_3$) au volume total de la composition ($BaTiO_3$ + phase organique) peut être avantageusement compris entre 15 et 35 %, et encore plus préférentiellement entre 20 et 30 %, et ceci dans le but d'obtenir les meilleures propriétés absorbantes possibles. Toutefois, lorsque les propriétés réfléchissantes de la composition ne constituent pas un problème gênant en soi dans le cas de certaines applications bien particulières, comme par exemple dans le cas d'une utilisation en tant que joint pour fours à micro-ondes, des pourcentages volumiques en $BaTiO_3$ allant jusqu'à 60 % sont possibles.

De manière classique, la dispersion selon l'invention peut être obtenue simplement soit en introduisant sous agitation la poudre de titanate dans le composé organique maintenu par chauffage à l'état fondu, puis en refroidissant le mélange homogène obtenu, soit par malaxage à froid sur un cylindre rotatif.

Les poudres de titanate de baryum classiques qui sont utilisées en électronique (fabrication de condensateurs par exemple) et qui sont synthétisées selon des voies diverses et bien connues en soi, ne conviennent intrinsèquement pas pour une utilisation directe dans le cadre de la présente invention, ne serait ce qu'en raison notamment de leur taille submicromique (généralement comprise entre 0,1 et 0,5 µm) ; il en a donc résulté la nécessité pour la Demanderesse de traiter ces poudre pour les adapter aux exigences spécifiques précédemment définies dans la présente description.

Cet objectif est atteint par le procédé de traitement selon l'invention, qui consiste à traiter thermiquement à une température comprise entre 1100° C et 1600° C une poudre submicronique de titanate de baryum (qualité électronique) préalablement obtenue par tout moyen de synthèse connu en soi.

Une température de traitement inférieure à 1100° C ne permet que difficilement d'obtenir la croissance cristalline et la phase quadratique désirées ; une température de traitement supérieure à 1600° C entrainerait en un début de fusion néfaste des grains.

De préférence, la température du traitement thermique est comprise entre 1150 et 1350° C, et plus avantageusement encore située aux environs de 1250° C.

Le traitement thermique est généralement opéré sous air, bien que tout autre atmosphère puisse éventuellement convenir, par exemple une atmosphère réductrice.

Selon un mode particulier de mise en oeuvre du traitement selon l'invention, on ajoute à la poudre de titanate de baryum un additif dont la fonction première est d'aider à la croissance des grains. De préférence, cet additif sera un sel de lithium et encore plus particulièrement du fluorure de lithium LiF ; il a en effet été trouvé que l'emploi d'un tel additif présente en outre l'avantage d'augmenter de façon substantielle la constante diélectrique du titanate de baryum final, avantage qui est particulièrement intéressant dans l'application considérée.

Il est ainsi possible d'aboutir à des poudres dont la constante diélectrique soit nettement supérieure à 1000.

Comme indiqué précédemment, les poudres submicromiques sur lesquelles s'applique le traitement selon l'invention peuvent avoir été obtenues par tout moyen à la disposition de l'homme de l'art ; seul importe le fait que la poudre qui sera utilisée à la préparation de la composition selon l'invention ait subi, au moins une fois, le traitement selon l'invention et sans broyage ultérieur.

Plus spécifiquement, ces poudres peuvent avoir été obtenues par des voies connues du type :
- chamottage, c'est à dire réaction à l'état solide, à hautes températures (1000°C), entre une poudre d'un sel de baryum contenant un anion volatil, le carbonate de baryum par exemple, et une poudre d'oxyde de titane ;
- précipitation en phase liquide, organique ou aqueuse, suivie d'une calcination du précipité ;
- précipitation en bains de sels fondus
- sol-gel (cf demande de brevet français FR 2.551.743).

Cette liste de procédés n'est bien entendu nullement limitative.

D'autre part, pour chacun de ces procédés, il est possible, en ajustant de manière classique et connue les conditions opératoires, d'obtenir à volonté les poudres titanates qui présentent les qualités préférentiellement requises pour la préparation de la composition absorbante, notamment en ce qui concerne le rapport Ba/Ti et la pureté en strontium.

Eventuellement, l'additif aidant à la croissance des grains tel que défini ci-avant peut être rajouté lors de ces synthèses premières.

Les compositions absorbantes selon l'invention trouvent une application particulièrement intéressante dans le cadre de la réalisation de joints destinés à limiter ou éliminer les fuites, nocives pour l'organisme, qui émanent de certains dispositifs générateurs d'ondes centimétriques (micro-ondes : $2 < \lambda < 15$ cm$^{-1}$), tels

que par exemple les fours à micro-ondes dont l'utilisation domestique s'est aujourd'hui largement généralisée.

Après mise à la forme désirée, le joint est alors placé entre la porte du four et les bords extérieurs de l'enceinte de cuisson, de manière à ce que les micro-ondes, par absorption et/ou réflections successives, ne puissent quitter l'enceinte intérieure du four.

Des exemples concrets illustrant l'invention vont maintenant être donnés.

EXEMPLE COMPARATIF 1

Une poudre de titanate de baryum de qualité électronique est préparée selon un procédé tel que décrit dans la demande de brevet français n° 2.551.743.

Cette poudre est constituée de particules présentant un diamètre moyen de 0,8 $\mu$m, ces particules étant elles-mêmes constituées par l'aggrégation de cristallites élémentaires dont la taille est de l'ordre de 0,2 à 0,3 micron.

La surface spécifique BET de cette poudre est de l'ordre de 4 m²/g.

Le rapport Ba/Ti est de 1,00 $\pm$ 0,01.

Cette poudre est alors mélangée sur un malaxeur à cylindre avec du PVC (polychlorure de vinyle) plastifié, à raison de 65 g de titanate de baryum pour 100 g de PVC.

La pâte obtenue est pressée sous 50 bars et à 180°C sous forme de plaques (300 x 300 x 2 mm).

On obtient alors une plaque de PVC contenant 11 % en volume de $BaTiO_3$.

On mesure la constante diélectrique de cette plaque à 2,45 Gigahertz. On trouve une valeur pour $\varepsilon'$ de 4,7 et pour $\varepsilon''$ 0,02.

La valeur très faible d'$\varepsilon''$ dénote un très faible pouvoir d'absorption de la plaque dans le domaine des micro-ondes.

EXEMPLE 2

La poudre de titanate de baryum de qualité électronique préparée selon l'exemple 1 est calcinée à trois températures différentes pendant 12 heures, sous air, puis démottée.

A partir de ces trois poudres, on réalise alors trois plaques échantillons conformes à l'invention, selon les mêmes modalités pratiques que l'exemple 1.

Les résultats des mesures, effectuées à 2,45 Gigahertz, sont rapportés dans le tableau I ci-dessous.

TABLEAU I

|  | T° de calcination | Øm *($\mu$m) | $\varepsilon'$ | $\varepsilon''$ |
|---|---|---|---|---|
| Echantillon 1 | 1150 | 1,1 | 5,43 | 0,15 |
| Echantillon 2 | 1250 | 2,2 | 6,51 | 0,23 |
| Echantillon 3 | 1350 | 10,9 | 5,21 | 0,11 |

* : Øm désigne le diamètre moyen des particules constituant la poudre de titanate de baryum présente dans l'échantillon.

Les valeurs élevées d'$\varepsilon''$ à cette fréquence (2,45 GHertz) et à ces concentrations en $BaTiO_3$ dénotent un très bon pouvoir d'absorption des échantillons conformes à l'invention dans le domaine des micro-ondes.

EXEMPLE 3

La poudre de titanate de baryum de qualité électronique préparée selon l'exemple 1 est calcinée à 1360°C puis dispersée par malaxage dans un élastomère silicone contenant un peu de péroxyde de benzoyle (agent de réticulation).

Une plaque échantillon est alors réalisée selon les mêmes modalités pratiques que l'exemple 1, sauf que la plaque obtenue est ensuite réticulée à 300°C dans un four à passage et qu'elle contient alors 30,3 % en volume de titanate de baryum.

Les résultats des mesures de la constante diélectrique de cette plaque (effectués à 2,45 Gigahertz) sont les suivants :

$\varepsilon'$ : 13,9

$\varepsilon''$ : 0,5

Par rapport aux résultats de l'exemple 2, les valeurs très élevées de $\varepsilon'$ et $\varepsilon''$ s'expliquent par la teneur volumique plus importante en $BaTiO_3$ dans la plaque échantillon (30,3 % contre 11%).

EXEMPLE 4

On ajoute à la poudre de titanate de baryum de qualité électronique préparée selon l'exemple 1, 1 % en mole de fluorure de lithium LiF, puis on réalise sur ce mélange une calcination à 1350°C pendant 12 heures.

Une étude par microscopie électronique à balayage permet d'observer un grossissement important de la taille des cristallites pendant la calcination, et des cristallites supérieurs à 10 $\mu$m sont mis en évidence.

A l'issue de cette calcination, on obtient une poudre dont la taille moyenne des particules est de 23,42 $\mu$m.

La poudre obtenue est dispersée dans du PVC à raison de 45 g de BaTiO₃ pour 100 g de PVC.

On réalise alors une plaque échantillon selon des modalités pratiques identiques à celles de l'exemple 1. Cette plaque contient 8 % en volume de BaTiO₃.

Les résultats des mesures de la constante diélectrique de cette plaque (effectuées à 2,45 GigaHertz) sont les suivants :

$\varepsilon'$ : 4,6

$\varepsilon''$ : 0,23

Là encore, ces résultats dénotent un très bon pouvoir d'absorption dans le domaine des micro-ondes.

D'autre part, compte tenu de la concentration plus faible en titanate utilisée, ces résultats doivent être considérés comme encore meilleurs que ceux obtenus pour les échantillons de l'exemple 2.

EXEMPLE 5

La poudre de titanate de baryum de qualité électronique préparée selon l'exemple 1, est calcinée à 1360°C puis dispersée par malaxage dans un élastomère silicone contenant un peu de péroxyde de benzoyle (agent de réticulation). Un joint de section rectangulaire (15 x 3 mm) est alors réalisé par extrusion puis réticulation à 300°C dans un four à passage.

Le joint obtenu contient 25 % en volume de titanate de baryum.

Des mesures de fuite sont alors effectuées sur un four à micro-ondes de 600 Watts (four MOULINEX®type FM 410) à joints apparents.

Le joint selon l'invention est placé dans la partie supérieure de la porte avant du four.

Les fuites sont mesurées par un détecteur à cristal "APPOLLO MONITOR XI", alors que le four contient 250 cm³ d'eau salée.

En l'absence de joint, les fuites mesurées varient entre 3 milliwatts/cm² et plus de 10 milliwatts/cm² suivant la position du détecteur sur la porte.

En présence du joint selon l'invention, les fuites mesurées varient entre 0,3 milliwatt/cm² et 1,2 millwatts/cm².

**Revendications**

1/ Composition de matière, du type comprenant une poudre de titanate de baryum en dispersion dans une matrice organique, caractérisée en ce que le diamètre moyen des particules constituant ladite poudre de titanate de baryum est supérieur ou égal à 1 micron.

2/ Composition de matière selon la revendication 1 caractérisée en ce que ledit diamètre moyen est supérieur ou égal à 10 microns.

3/ Composition de matière selon la revendication 2 caractérisée en ce que ledit diamètre moyen est supérieur ou égal à 100 microns.

4/ Composition de matière selon l'une quelconque des revendications 2 et 3, caractérisée en ce que les particules sont constituées par l'agrégation de cristallites élémentaires dont le diamètre moyen est supérieur ou égal à 1 micron.

5/ Composition de matière selon l'une quelconque des revendications précédentes caractérisée en ce qu'au moins 50 % en volume du titanate de baryum se présente sous une forme cristalline quadratique.

6/ Composition de matière selon la revendication 5 caractérisée en ce que ladite teneur en phase quadratique est d'au moins 90 % en volume.

7/ Composition de matière selon l'une quelconque des revendications précédentes caractérisée en ce que le rapport molaire Ba/Ti dudit titanate de baryum est légèrement supérieur à 1.

8/ Composition de matière selon l'une quelconque des revendications précédentes caractérisée en ce que la teneur du strontium contenu dans la poudre de titanate de baryum est inférieure ou égale à 1% en poids.

9/ Composition de matière selon la revendication 8 caractérisée en ce que ladite teneur en strontium est inférieure à 0,1 % en poids.

10/Composition de matière selon l'une quelconque des revendications précédentes caractérisée en ce que le rapport du volume occupé par la poudre de titanate de baryum au volume total de la composition est compris entre 0,15 et 0,60 et de préférence entre 0,15 et 0,35.

11/Procédé de préparation d'une poudre de titanate de baryum susceptible d'être utilisée à la préparation d'une composition de matière telle que définie à l'une quelconque des revendications 1 à 10, caractérisé en ce qu'il consiste à traiter thermiquement à une température comprise entre 1100 et 1600°C une poudre submicromique de titanate de baryum.

12/Procédé selon la revendication 11 caractérisé en ce que ledit traitement thermique est opéré à une température comprise entre 1150 et 1350°C.

13/Procédé selon la revendication 12 caractérisé en ce que ledit traitement thermique se situe aux environs de 1250°C.

14/Procédé selon l'une quelconque des revendications 11 à 13 caractérisé en ce que ledit traitement thermique est opéré sous air.

15/Procédé selon l'une quelconque des revendications 11 à 14 caractérisé en ce que ledit traitement thermique est opéré en présence d'un additif aidant à la croissance cristalline du titanate de baryum.

16/Procédé selon la revendication 15 caractérisé en ce que ledit additif est un sel de lithium.

17/Procédé selon la revendication 16 caractérisé en ce que ledit sel de lithium est le fluorure de lithium.

18/Absorbeur d'ondes électromagnétiques, notamment de micro-ondes, caractérisé en ce qu'il est obtenu à partir d'une composition de matière telle que définie à l'une quelconque des revendications 1 à 10.

19/Absorbeur selon la revendication 18 caractérisé en ce qu'il s'agit d'un joint pour fours à micro-ondes.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | JP-A-58 098 338 (UNITIKA LTD) <br> * Page 297, tableau 2 * <br> --- | 1,18 | C 08 K 3/24 <br> H 01 Q 17/00 <br> H 05 B 6/76 |
| X | US-A-4 277 389 (H. SCHEETZ) <br> * Colonne 2, lignes 21-33 * <br> ----- | 1-2,4 | C 08 K 9/00 <br> C 09 C 1/36 |

**DOMAINES TECHNIQUES RECHERCHES (Int. Cl.4)**

C 08 K
C 08 L
C 09 C
H 01 Q

**Le présent rapport a été établi pour toutes les revendications**

| Lieu de la recherche | Date d'achèvement de la recherche | Examinateur |
|---|---|---|
| LA HAYE | 07-07-1989 | HOFFMANN K.W. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P0402)